# DEMANDE DE BREVET EUROPEEN

(11) **EP 2 869 243 A1**
(43) Date de publication de la demande: **06.05.2015**
(21) Numéro de dépôt: 13306497.2
(22) Date de dépôt: 31.10.2013
(51) Int. Cl.: G06K 19/07, G06K 19/077

(54) **Carte à puce comportant une batterie et procédé de fabrication d'une telle carte**

(71) Demandeur: Gemalto SA, 92190 Meudon (FR)
(72) Inventeur: Le Loc'h, Alain, 92190 Meudon (FR); Fidalgo, Jean-Christophe, 92190 Meudon (FR); Robles, Laurence, 92190 Meudon (FR)
(74) Mandataire: Cour, Pierre

(57) **Abrégé**

La carte à puce selon l'invention comporte un corps de carte, et une batterie et un module électronique connecté à et alimenté par ladite batterie, la batterie et le module électronique étant intégrés dans le corps de carte. La batterie est noyée dans le matériau constitutif du corps de carte, et le module est disposé dans une cavité formée dans la carte et débouchant sur au moins une face de la carte, la cavité étant réalisée de manière à permettre une connexion électrique avec les pattes de connexion de la batterie, et le module électronique comporte des plages de connexion mises en contact électrique avec les pattes de connexion de la batterie en conséquence de l'insertion du module dans la cavité.

Application notamment à la réalisation de carte à puce comportant un écran.

## Description

La présente invention concerne une carte à puce comportant une batterie ainsi qu'un nouveau procédé de fabrication d'une telle carte à puce.

On connaît déjà des cartes comportant une batterie intégrée, de manière que la carte puisse assurer diverses fonctions nécessitant une source d'énergie interne, permettant d'assurer le fonctionnement des divers composants ou modules électroniques indépendamment de toute connexion, matérielle ou non, avec une source d'énergie externe. Une telle batterie peut aussi par exemple suppléer à une insuffisance d'énergie dans la cas d'une connexion immatérielle, par couplage électromagnétique, par exemple dans le cas des cartes dites « sans contact » où on utilise une antenne intégrée à la carte pour transmettre à la fois l'énergie nécessaire au fonctionnement de la carte et les informations échangées entre la carte et un lecteur de carte.

En particulier, il est connu d'intégrer dans une carte à puce des moyens d'affichage, destinés par exemple à l'affichage d'un mot de passe à usage unique (connu sous l'acronyme OTP pour One Time Password) ou d'une valeur de vérification (dCVV pour dynamic Code Verification Value).

Un procédé connu de fabrication de cartes comportant un écran d'affichage consiste à assembler sur un même substrat les divers composants électroniques de la carte, tels que afficheur, batterie, microcontrôleur, etc., et à insérer le module ainsi formé dans une cavité formée dans un corps de carte. Puis de la résine est injectée pour combler les espaces libres entre les composants, et entre les composants et les bords de la cavité, et des feuilles de surface sont disposées de part et d'autres du corps et laminées avec celui-ci pour assurer leur assemblage final, en intégrant ainsi dans le corps et entre les couches de surface le dit module électronique et ses composants.

WO2011/147843-A1, par exemple, décrit un tel système d'intégration dans une carte d'un module électronique qui peut comporter une batterie, disposée alors sous un écran, entre ce dernier et un substrat souple portant tous les autres composants électroniques. Dans cet exemple, le module électronique complet et préparé préalablement est ensuite placé dans une cavité formée dans l'épaisseur de la carte et traversant la carte de part en part. Ce système implique que la batterie ne peut être que très petite, typiquement inférieure à la taille de l'écran, de manière à pouvoir être placée sur le substrat avec tous les autres composants, tout en limitant les dimensions du module électronique de manière ne pas affaiblir la résistance mécanique de la carte par une cavité de grande dimension, dans laquelle il serait d'ailleurs d'autant plus difficile de maintenir le module complet. La petite dimension d'une telle batterie fait que cette technologie ne peut être utilisée dès lors que les composants électroniques sont de relativement gros consommateurs d'énergie, et/ou doivent pouvoir fonctionner pendant de longues périodes sur l'énergie stockée dans la batterie, ce qui est le cas par exemple dans des cartes avec un module comportant un écran d'affichage et comportant une horloge embarquée qui doit fonctionner en permanence pendant la durée courante d'utilisation d'une carte bancaire, soit 3 ans.

De manière générale, il s'avère très difficile d'intégrer sans dégradation dans un corps de carte en matière plastique d'épaisseur réduite, typiquement de l'ordre de 800 µm, un ensemble de composants électroniques tels que batterie, afficheur, quartz d'horloge, résonateur, horloge à temps réel, touches de clavier ou interrupteurs, microcontrôleur et autres composants électroniques actifs ou passifs. EP 0570784 décrit une procédé d'intégration de composants dans une carte par lamination à chaud ou à froid, les composants étant enrobés d'une résine liquide ou pâteuse qui est laminée avant durcissement, éventuellement entre deux feuilles formant les faces opposées de la carte, pour former le corps de carte. La résine est ainsi supposée enrober et donc maintenir les composants en place après polymérisation et/ou refroidissement de la résine. Un inconvénient de cette technique est l'utilisation d'une grande quantité de résine nécessaire pour enrober l'ensemble des composants. De plus, il est difficile d'assurer la mise en place de la résine sans que des bulles se forment, notamment au contact des composants, ce qui est préjudiciable à leur bon maintien, et donc à la fiabilité de leurs connexions électriques. De plus encore, on ne peut pas utiliser comme résine des matériaux nécessitant des températures élevées pour leur durcissement, car une température trop élevée risque d'endommager certains composants électroniques fragiles que sont notamment les écrans d'affichage, etc.

L'ensemble des difficultés rencontrées pour fabriquer de telles cartes conduit donc à un coût élevé des ces cartes, en particulier des cartes comportant un afficheur et une batterie, alors que ce type de carte tends à se développer fortement.

La présente invention a pour but de résoudre les problèmes évoqués ci-dessus, et vise en particulier à permettre la réalisation à moindre coût de cartes à puces comportant une batterie et des composants électroniques, connectés et alimentés à partir de cette batterie, tels que moyens d'affichage ou générateurs de signaux sonores, ou encore circuits de communication radio, etc. Elle vise aussi à assurer une meilleure fiabilité des cartes fabriquées en évitant de les soumettre lors de leur fabrication à des contraintes mécaniques et thermiques importantes, susceptibles de détériorer certains des composants électroniques intégrés dans ces cartes. Elle vise de manière générale à faciliter la fabrication des telles cartes, pour permettre d'étendre leurs domaines d'applications et assurer de nouvelles fonctionnalités, notamment utilisables par des cartes de manière complètement autonome.

Avec ces objectifs en vue, l'invention a pour objet une carte à puce comportant un corps de carte, et une batterie et un module électronique connecté à et alimenté par ladite batterie, la batterie et le module électronique étant intégrés dans le corps de carte.

Selon l'invention, la carte à puce est **caractérisée en ce que** la batterie est noyée dans le matériau constitutif du corps de carte, en étant enrobée dans le matériau constitutif du corps de carte, et le module est disposé dans une cavité formée dans la carte et débouchant sur au moins une face de la carte, la cavité étant réalisée de manière à permettre une connexion électrique avec les pattes de connexion de la batterie, et le module électronique comporte des plages de connexion mises en contact électrique avec les pattes de connexion de la batterie en conséquence de l'insertion du module dans la cavité.

Ainsi, on dissocie d'une part l'intégration de la batterie dans la carte et d'autre part l'intégration du module. Cela permet de réduire fortement l'espace qui doit être nécessairement réservé dans le corps de carte pour y insérer le module après que le corps de carte ait été laminé et imprimé, grâce au fait que la batterie a été préalablement intégrée dans le corps de carte lors de la fabrication de ce dernier. De plus, cela permet de placer dans la carte une batterie de grande capacité, et donc de grande dimension, du fait que la batterie peut s'étendre sur une surface importante dans la carte, contrairement à l'art antérieur précité où la dimension de la batterie est nécessairement limitée, contrainte à la fois par l'espace disponible dans l'épaisseur, entre l'afficheur et les autres composants, et par sa dimension dans le plan de la carte, qui conduirait à une cavité excessivement grande s'il fallait augmenter la dimension de la batterie dans ce plan.

Selon une disposition particulière, la cavité présente une zone d'appui, située sensiblement dans un plan parallèle au plan général de la carte, et sur laquelle s'appuie le module électronique, et les plages de connexion du module sont connectées avec les pattes de connexion de la batterie par des moyens de connexion affleurant au niveau de ladite zone d'appui. Cette zone d'appui, préférentiellement sensiblement parallèle au plan général de la carte, peut être facilement réalisée lors de l'usinage par fraisage de la cavité. Comme on le verra par la suite, elle permet d'assurer facilement le positionnement correct du module dans l'épaisseur de la carte, ce qui est particulièrement important lorsque le module comporte par exemple un afficheur qui doit être juste affleurant à la surface de la carte.

On notera cependant que l'application de l'invention n'est pas limitée à des cartes comportant de tels afficheurs, ou d'autres composants qui doivent nécessairement être affleurant à la surface de la carte, mais peut aussi concerner des cartes comportant un composant consommateur d'énergie qui serait totalement intégré dans la carte, sans besoin pour l'utilisateur d'y accéder par la vue ou le toucher, par exemple un buzzer ou autre source sonore, ou encore un émetteur radio, etc.

Selon une disposition complémentaire, lesdits moyens de connexion comportent des plots conducteurs solidarisés sur les pattes de la batterie avant que batterie soit noyée dans le matériau du corps de carte.

L'utilisation de tels plots permet de satisfaire au besoin d'adapter la position relative entre les plages de connexion du module électronique et les bornes de la batterie. En effet, d'une part, du fait de la faible épaisseur des pattes de connexion de la batterie, il serait difficile d'assurer un usinage de la cavité très précis pour mettre à jour lesdites pattes sans risquer de détériorer celles-ci. D'autre part, il est nécessaire de pouvoir assurer, de manière certaine et fiable tout au long de l'utilisation ultérieure de la carte, le contact électrique entre les pattes de la batterie et les plages de connexion du module lorsque le module est inséré dans la cavité. Or, si l'usinage de la cavité permet de déterminer de manière précise la position de la surface d'appui du substrat par rapport à la surface de la carte, la position de la batterie elle-même, et donc de ses pattes de connexion, peut être plus imprécise. L'utilisation de plots rapportés permet donc de disposer d'une épaisseur accrue de matière pour être sûr que l'usinage permettra de mettre à jour lesdits plots, en enlevant éventuellement une partie supérieure de ces plots lors de l'usinage, mais sans que cela soit préjudiciable à la conservation en parfait état des pattes de connexion de la batterie.

Des plots similaires peuvent aussi être formés sur les plages de connexion du module.

Selon une disposition particulière, le module électronique comporte un substrat servant de support à un composant présentant une surface active utile, tel qu'un écran ou autre dispositif d'affichage ou encore un capteur, et le module est inséré dans la cavité jusqu'à ce que ladite surface active utile affleure une surface de la carte.

Par composant ayant une surface active utile, on désigne tout composant présentant une face qui doit être accessible au regard ou au toucher d'un utilisateur lorsque le composant est intégré dans la carte. Ce peut être en particulier un écran de visualisation, permettant de visualiser diverses informations dont l'affichage est commandé par les autres composants du module. Ce peut être préférentiellement, mais non exclusivement, un écran d'affichage d'un code de vérification de carte bancaire ou encore un élément plus complexe tel qu'un logo, une photo un code barre 2D ou un texte affiché sur plusieurs lignes. Ce peut être aussi un composant tactile servant d'interrupteur ou de capteur, pour reconnaissance d'empreinte digitale, etc ...

Typiquement, le substrat sert aussi de support à d'autres composants électroniques tels que microcontrôleur, résonateur, horloge à temps réel, clavier ou interrupteurs, et/ou autres composants électroniques actifs ou passifs et porte les pistes conductrices de liaison de tous les composants.

La carte peut aussi comporter un ou des modules annexes, typiquement un module présentant des zones de contact en surface de carte, du type couramment utilisé dans les cartes bancaires à contact ou cartes SIM connues. Un tel module annexe peut être placé dans la carte de manière habituelle, en étant indépendant du module et de la batterie selon l'invention.

Selon une disposition alternative, le module électronique est un module commun comportant un substrat commun portant à la fois les composants du circuit raccordé à la batterie et d'autres composants reliés à des pistes de contact situées à la surface de la carte et/ou reliés à une antenne intégrée à la carte. Ces composants non reliés à la batterie sont typiquement les composants constitutifs d'un module annexe tel que défini ci-dessus, mais ils sont alors assemblés sur le même substrat que les composants du module électronique consommateur d'énergie spécifique à l'invention.

Dans ce dernier cas, le module commun est disposé dans une cavité commune adaptée pour recevoir simultanément tous les composants montés sur le substrat commun. Les composants constituant le circuit non raccordé à la batterie pourront être connectés de manière classique à des zones de contact en surface, préférentiellement formées sur la face du substrat commun opposée à la face portant les composants, et/ou à une antenne intégrée de type général connu pour des cartes sans contact. Dans ce cas, avantageusement, l'antenne est intégrée à la carte en étant noyée, de manière similaire à la batterie, dans le matériau constitutif de la carte, et elle présente des plages de connexion rendues accessibles dans la cavité par l'usinage de cette cavité. Le module commun est connecté aux plages de connexion de l'antenne par des moyens de connexion affleurant au niveau de ladite zone d'appui de la cavité, de manière similaire à sa connexion avec la batterie, lors de son insertion dans la cavité du corps de carte.

Selon un mode de réalisation particulier, le module électronique comporte un composant présentant une surface active utile situé sur une première face du substrat et ses plages de connexion sont situées sur une deuxième face du substrat, opposée à la première face. Typiquement, au moins certains des autres composants portés par le substrat sont placés également sur cette deuxième face. Dans ce cas, la cavité formée dans le corps de carte sera non débouchante à travers le corps de carte, et comportera une première partie, de plus grande dimension, apte à recevoir le substrat et le composant présentant une surface active utile, et une seconde partie, réalisée plus en profondeur et de dimensions plus petites, apte à recevoir les composants situés sur la deuxième face du substrat. Les pattes de connexion de la batterie sont accessibles au niveau du plan situé entre les deux parties de la cavité, et qui constitue donc le fond de la première partie de la cavité, contre lequel la zone périphérique du substrat vient en appui.

Dans ce mode de réalisation, le substrat se trouve donc dans un plan intermédiaire, sensiblement médian, entre les deux faces de la carte, et puisque les divers composants y compris le composant présentant une surface active utile, se trouvent répartis sur les deux faces du substrat, la dimension du substrat peut être réduite.

Un élément de recouvrement peut être agencé de manière à recouvrir et dissimuler les parties de substrat débordant autour du composant présentant une surface active utile, au niveau de l'interface entre ledit composant et le bord de la cavité. On peut envisager par exemple deux modes de réalisation de cet élément de recouvrement.

Dans un premier mode, la zone autour de l'écran est recouverte par une succession de couches d'encre déposées par un procédé d'impression sans contact, par exemple de type jet d'encre. On pourra par exemple imprimer d'abord une encre blanche pour assurer un fond puis d'autres encres pour imprimer un motif, par exemple en quadrichromie ou en hexachromie.

Dans un second mode de réalisation, l'élément de recouvrement peut être formé ou mis en place autour du composant présentant une surface active utile avant l'insertion du module dans la carte, en particulier lors de la fabrication du dit module, en constituant alors une sorte d'étiquette perforée ou de cadre entourant le composant présentant une surface active utile et ayant une forme et des dimensions extérieures correspondant à celles de la première partie de la cavité.

Selon un autre mode de réalisation, le composant présentant une surface active utile et tous les autres composants ainsi que les plages de connexion sont situés sur une même première face du substrat, la cavité est débouchante à travers l'épaisseur de la carte, et comporte une partie de plus petite dimension débouchant sur une première face de la carte et adaptée pour recevoir le composant présentant une surface active utile, et une partie de plus grande dimension débouchant sur la deuxième face de la carte et adaptée pour recevoir le substrat. La deuxième face du substrat peut être sensiblement affleurante à la deuxième face de la carte, ou en retrait par rapport à cette deuxième face. Une cavité annexe peut être formée à coté de la cavité de plus petite dimension, en communication avec celle-ci ou non, mais non débouchante sur la première face de la carte, pour recevoir les autres composants que le composant présentant une surface active utile.

Dans ce mode de réalisation, le substrat se trouve donc au niveau d'une face de la carte, ce qui permet de disposer de plus de place dans l'épaisseur de la carte pour y loger divers composants, disposés à côté ou autour du composant présentant une surface active utile.

Un élément de recouvrement rapporté peut être agencé de manière à recouvrir et dissimuler la surface de substrat affleurant à la surface de la carte, ainsi que, au besoin, les interfaces entre le corps de carte et, d'une part, le composant présentant une surface active utile et, d'autre part, le substrat. Cet élément de recouvrement peut être réalisé de manière similaire à ce qui a été dit pour le mode de réalisation précédent. Cet élément de recouvrement peut notamment être, plus simplement, et puisque l'interface entre le composant présentant la surface active utile et le bords de la cavité peut être de dimension très réduite, une feuille décorative ou imprimée, ou comportant par exemple un hologramme, rapportée à la surface de la carte. La zone d'interface peut aussi être dissimulée par une impression, l'espace entre le composant et la carte pouvant être rempli par utilisation d'un procédé d'impression, notamment d'impression digitale.

L'invention a aussi pour objet un procédé de fabrication d'une carte à puce comportant une batterie et un module électronique connecté et alimenté par ladite batterie, telle que définie précédemment, ce procédé comportant notamment les étapes suivantes :
- préparation d'un module électronique comportant divers composants électroniques de la carte, à l'exclusion de la batterie,
- réalisation d'un corps de carte en noyant totalement une batterie dans l'épaisseur du corps de carte,
- réalisation d'une cavité dans le corps de carte, de dimension apte à recevoir le module électronique, et de manière à rendre accessible électriquement les bornes de la batterie,
- insertion du module électronique dans la cavité, en assurant la connexion électrique du module avec les bornes de la batterie et de manière à solidariser le module avec le corps de carte.

L'invention a aussi pour objet un corps de carte pour une carte à puce telle que définie précédemment, **caractérisé en ce qu'il** comporte, noyée dans la matière qui le constitue essentiellement, une batterie dont les pattes de connexion sont accessibles électriquement à l'intérieur d'une cavité formée dans le corps et débouchant sur au moins une des faces dudit corps, ladite cavité étant destinée à recevoir un module électronique connecté sur la batterie.

Selon une disposition préférentielle, le corps de carte comporte des plots de connexion solidaires des pattes de connexion de la batterie, et affleurant dans la cavité.

Selon un mode de réalisation particulier, le corps de carte comporte également une antenne noyée dans la matière constitutive du corps de carte, dont les plages de connexion sont accessibles électriquement à l'intérieur de la cavité.

D'autres caractéristiques et avantages apparaîtront dans la description qui va être faite de plusieurs variantes de cartes conformes à l'invention, ainsi que du procédé de fabrication de ces cartes.

On se reportera aux dessins annexés dans lesquels :
- la figure 1 illustre la préparation du corps de carte, intégrant une batterie,
- la figure 2 est une vue en coupe d'une carte conforme à l'invention, après usinage de la cavité et intégration du module dans ladite cavité,
- la figure 3 est une vue en coupe du corps de carte, avant mise en place du module,
- la figure 4 est une vue en plan d'une carte selon une première variante,
- la figure 5 est une vue en coupe de la carte de la figure 4,
- la figure 6 illustre un exemple particulier de réalisation du module utilisé dans la carte des figures 4 et 5
- la figure 7 est une vue en plan d'une carte selon une deuxième variante,
- la figure 8 est une vue en coupe de la carte de la figure 7,
- la figure 9 est une vue en plan d'une carte selon une troisième variante,
- la figure 10 est une vue en coupe de la carte de la figure 9,
- la figure 11 est une vue en plan d'une carte selon une quatrième variante,
- la figure 12 est une vue en coupe de la carte de la figure 11.

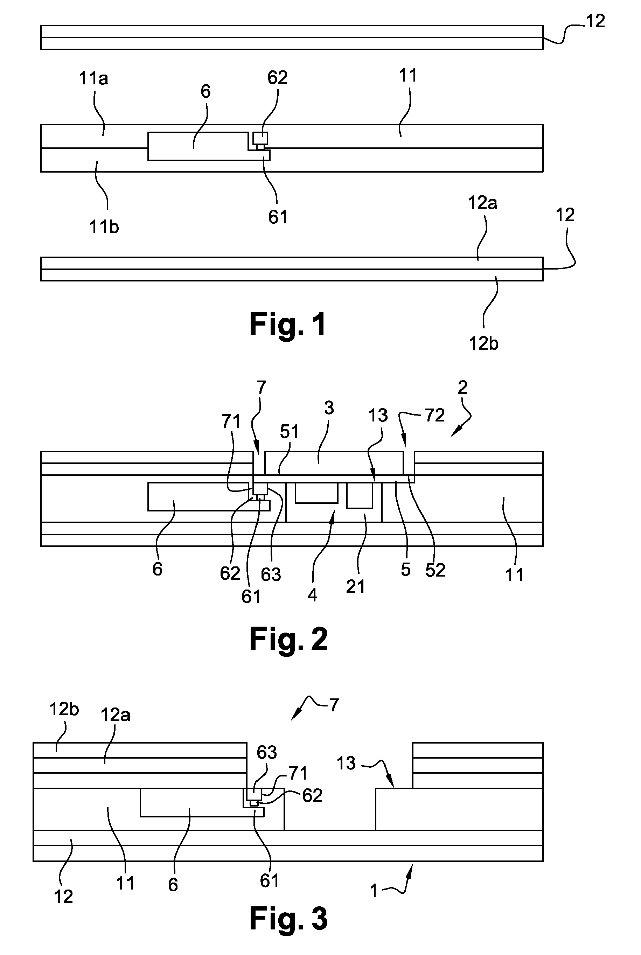

La carte à puce représentée figure 2 comporte un corps de carte 1 intégrant un module électronique 2 qui comprend un écran 3 et des composants annexes 4, tous fixés sur un substrat 5 et connectés entre eux via ce substrat. Le corps de carte intègre aussi une batterie 6, noyée dans la matière du corps de carte. Typiquement la batterie a une épaisseur de 400 µm pour une épaisseur de carte de 800 µm.

On va maintenant décrire les différentes phases de fabrication de cette carte conformément à l'invention.

Préférentiellement, avant de noyer la batterie 6 dans le matériau du corps de carte, on adapte sur les pattes de connexion 61 de la batterie des plots de connexion 62, constitués par exemple de colle conductrice bi-composants, ou de colle conductrice monocomposant qui peut être polymérisée à moins de 100°C en moins de 30 minutes.

Selon une disposition particulière, illustrée figure 1, le corps de carte 1 est réalisé en formant une couche prélaminée 11 incorporant totalement la batterie 6, puis en adaptant de part et d'autre de cette couche prélaminée 11 des feuilles 12 constituant les couches de surface de la carte. La couche prélaminée 11 incorporant la batterie peut être fabriquée par exemple en plaçant la batterie, pourvue des plots de connexion 62 déposés sur ses pattes de connexions, dans une cavité ménagée dans un ensemble de feuilles, formant par exemple deux couches 11a, 11b de matière plastique prédécoupées, dans lesquelles on aura ménagé préalablement des logements adaptés pour recevoir ladite batterie, puis en procédant à une prélamination assurant une parfaite intégration de la batterie dans la matière tout en calibrant l'ensemble à une épaisseur constante souhaitée. Cette lamination peut être effectuée, en fonction du matériau des couches 11a et 11b, à froid ou à chaud, en limitant toutefois la température pour ne pas échauffer excessivement la batterie. Bien entendu, on pourra utiliser un nombre de couches prédécoupées plus important de façon à bien épouser la forme de la batterie tout en évitant d'utiliser une éventuelle résine d'enrobage risquant de couler hors de la cavité.

On pourrait aussi réaliser le corps de carte 1 en incorporant la batterie par surmoulage de matière plastique autour de la batterie, ou en utilisant plus ou moins de feuilles ou de couches dans les opérations de lamination.

Les dites feuilles 12 de surface peuvent être notamment formées préalablement par assemblage par lamination d'une couche 12a opaque imprimée et d'une couche 12b de couverture transparente, de manière connue.

On assemble ensuite la couche prélaminée 11 et les feuilles 12 par une autre lamination, réalisé dans des conditions sensiblement standard. On veillera cependant à diminuer légèrement la température à 100°C maximum, pour ne pas risquer de détériorer la batterie par un échauffement trop important ou une température trop élevée.

On notera qu'il est aussi possible de réaliser en une seule opération la lamination à la fois des deux couches 12a, 12b, formant les feuilles et de celles-ci avec la couche prélaminée 11 incorporant la batterie, ceci permettant d'économiser une étape de lamination.

On notera encore que toutes ces opérations de préparation des cartes pourront préférentiellement être effectuées, de manière connue, sur des planches regroupant une pluralité de cartes, par exemple typiquement 24 ou 48 cartes par planche, chaque corps de carte étant ensuite découpé aux dimensions souhaitées par poinçonnage, de manière connue en soi.

Parallèlement à la fabrication des corps de carte 1, les modules 2 sont préparés par assemblage, sur une première face d'un substrat 5, du composant présentant une surface active utile, un écran 3 dans l'exemple décrit ici, ainsi qu'optionnellement un interrupteur, et sur l'autre face du substrat, d'autres composants 4 nécessaires, tels qu'unité de calcul, composants passifs, une horloge et son quartz, etc.

On réalise par usinage la cavité 7 requise dans le corps de carte. Les formes et les dimensions de la cavité 7 sont adaptées aux dimensions du module 2 qui y sera placé par la suite, et de manière à permettre une connexion électrique du module 2 sur les pattes 61 et les plots 62 de connexion de la batterie 6. Pour cela, on usine simultanément à l'usinage de la cavité 7 deux puits de connexion 71 de manière à atteindre sûrement les plots de connexion 62 de la batterie 6, sans atteindre les pattes de connexion 61.

Le module 2 préparé peut alors être inséré dans la cavité 7, en utilisant d'une part un matériau de connexion 63 disposé dans les puits de connexion 71 pour assurer la connexion avec la batterie, et d'autre part un adhésif 21 pour fixer le module 2 dans sa cavité. Le substrat 5 vient en appui contre une face d'appui 13, formée dans le corps de carte lors de l'usinage de la cavité, de manière à positionner le module 2 par rapport au corps de carte 1, pour que l'écran soit affleurant à la surface de la carte, et de manière à relier les plages de connexion 51 du module, formées sur le substrat 5, avec les plots 62.

La connexion électrique en elle même, entre les plages de connexion 51 du module et les plots 62 formés sur les pattes 61 de la batterie, pourra être réalisée par des matériaux de connexion 63 connus tels que colle conductrice, polymérisée avant ou après la mise en place du module dans la carte, soudure à basse température, ou encore des dispositifs à ressorts, etc.

Pour la fixation du module dans la cavité, on pourra utiliser un adhésif thermoactivable ou une colle liquide.

Pour finir, on obturera les espaces 72 subsistants entre l'écran 3 et les parois de la cavité, de manière à recouvrir les bords 52 du substrat dépassant autour de l'écran 2.

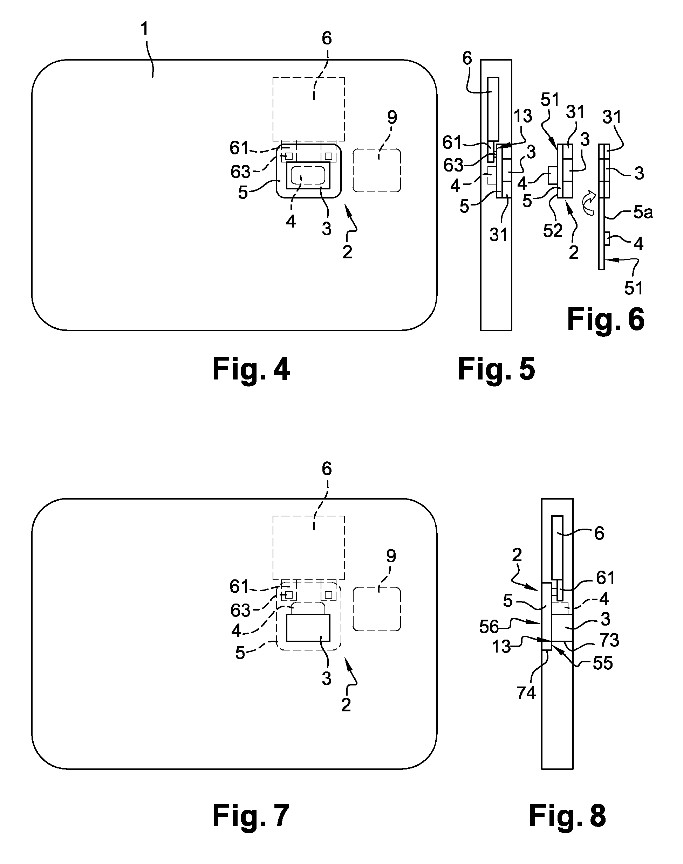

Les dessins des figures 4 à 6 illustrent une première variante d'une carte conforme à l'invention, fabriquée selon les principes généraux du procédé qui vient d'être décrit.

Dans cet exemple, comme on le voit figure 6, le module 2 est réalisé en implantant l'écran 3 et les autres composants 4 sur une même face d'un film 5a mince flexible portant par ailleurs les pistes conductrices de liaison desdits composants. Puis on replie le film 5a sur lui même, comme indiqué par la flèche de la figure 6, de manière à constituer un module 2 comportant un substrat 5 portant d'un côté l'écran 3 et de l'autre côté les autres composants 4. Cette manière de réaliser le module 2, similaire à celle qui est notamment décrite de manière plus détaillée dans le document WO-2011/147843 cité au début de ce mémoire, n'est nullement limitative, mais elle permet par exemple de réaliser notamment un circuit double face plus facilement, ce qui peut être avantageux en terme de coût et d'encombrement. On pourra bien sûr aussi utiliser un circuit double face sans utiliser la solution précédente.

Dans l'exemple présenté, on notera aussi la présence d'un cadre 31 placé autour de l'écran 3, contre le substrat et affleurant à la surface de l'écran, de manière à recouvrir le bord 52 du substrat qui dépasse autour de l'écran, et ainsi obturer directement ultérieurement l'espace 72 entre l'écran et le bord de la cavité 7.

Le module 2 est inséré dans la cavité préalablement fraisée dans le corps de carte, de manière similaire à ce qui a été indiqué précédemment, le substrat et l'écran venant se loger dans une première partie de la cavité, de plus grande dimension, et les autres composants 4 se logeant dans une seconde partie de la cavité, réalisée plus en profondeur dans la carte et de dimensions plus petites que la première partie. Le fond de la première partie de la cavité constitue la surface d'appui 13 contre laquelle le substrat est amené en butée lors de l'insertion du module dans la carte. Simultanément, on assure le contact des plages de connexion 51 du module avec les plots de la batterie, par l'intermédiaire du matériau conducteur 63.

On notera encore sur la vue de la figure 4 la présence, optionnelle, d'un module classique 9 de carte à puce à contact, intégré dans le corps de carte de manière indépendante du module 2 et de la batterie 6.

Les dessins des figures 7 et 8 illustrent une deuxième variante d'une carte conforme à l'invention. Dans cet exemple, l'écran 3 et les composants 4 sont disposés sur une même première face 55 du substrat 5, qui porte également les plages de connexion 51. La cavité 7 traverse le corps de carte 1 de part en part, en comportant une partie de plus petite dimension 73 débouchant sur une première face de la carte et adaptée pour recevoir l'écran 3, et une partie de plus grande dimension 74 débouchant sur la deuxième face de la carte et adaptée pour recevoir le substrat 5, la deuxième face 56 du substrat étant sensiblement affleurante à la deuxième face de la carte. La partie de cette cavité destinée à recevoir les composants annexes 4 peut être directement adjacente à la cavité recevant l'écran, comme représenté sur les figures, mais elle pourrait aussi en être distante.

Cette variante permet de disposer encore de plus de place pour les composants du module, qui peuvent occuper quasiment toute l'épaisseur de la carte. On notera aussi que la partie de la cavité de plus petite dimension pourra alors être réalisée par poinçonnage, puisqu'elle débouche sur les deux faces de la carte.

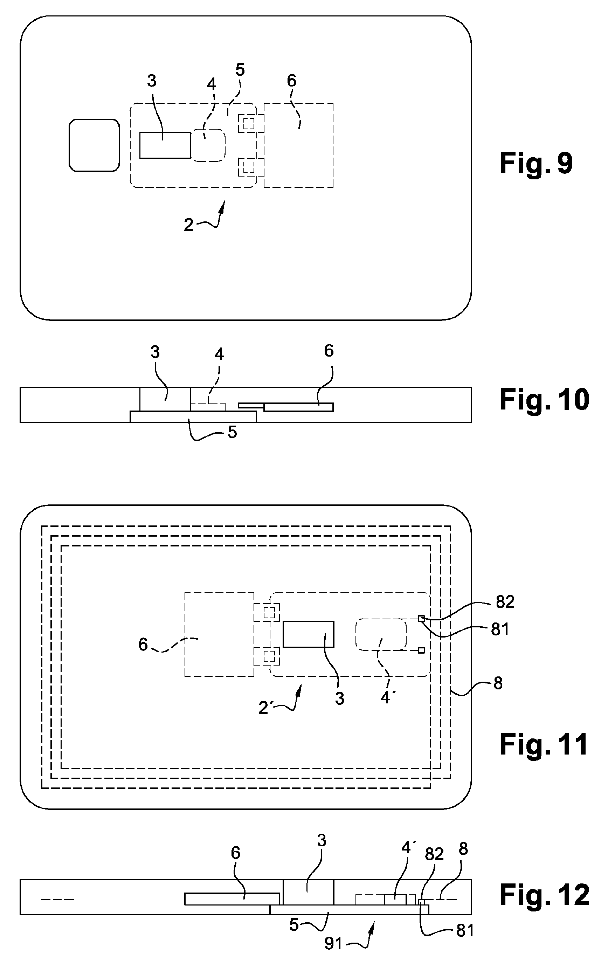

Les dessins des figures 9 et 10 illustrent une troisième variante similaire à celle des figures 7 et 8, qui s'en distingue seulement par une disposition différente de la batterie dans le corps de carte ainsi qu'une configuration différente du module 2.

Les dessins des figures 11 et 12 illustrent une quatrième variante d'une carte conforme à l'invention, dans laquelle le module 2' est commun pour l'écran 3 et ses composants annexes regroupés dans un même ensemble 4' avec une puce de carte à puce classique avec ou sans contacts externes. De plus le module est également connecté à une antenne 8 noyée dans le corps de carte, de manière similaire à l'intégration de la batterie, décrite précédemment. La connexion électrique du module avec l'antenne est également similaire à la connexion précédemment décrite du module avec la batterie, par utilisation de plots 81 fixés sur les plages de connexion 82 de l'antenne. De plus, des zones de contact 91 peuvent aussi être formées sur la face extérieure du substrat 5, pour assurer une connexion par contact de type courant.

## Revendications

1. Carte à puce comportant un corps de carte (1), et une batterie (6) et un module électronique (2) connecté à et alimenté par ladite batterie, la batterie et le module électronique étant intégrés dans le corps de carte, **caractérisée en ce que** la batterie (6) est noyée dans le matériau constitutif du corps de carte (1), et le module (2) est disposé dans une cavité (7) formée dans la carte et débouchant sur au moins une face de la carte, la cavité étant réalisée de manière à permettre une connexion électrique avec les pattes de connexion (61) de la batterie, et le module électronique (2) comporte des plages de connexion (51) mises en contact électrique avec les pattes de connexion de la batterie en conséquence de l'insertion du module dans la cavité.

2. Carte à puce selon la revendication 1, **caractérisée en ce que** la cavité (7) présente une zone d'appui (13), située sensiblement dans un plan parallèle au plan général de la carte, et sur laquelle s'appuie le module (2), et les plages de connexion (51) du module sont connectées avec les pattes de connexion (61) de la batterie par des moyens de connexion (62) affleurant au niveau de ladite zone d'appui.

3. Carte à puce selon la revendication 2, **caractérisée en ce que** lesdits moyens de connexion comportent des plots conducteurs (62) solidarisés sur les pattes (61) de la batterie avant que batterie soit noyée dans le matériau du corps de carte.

4. Carte à puce selon l'une quelconque des revendications précédentes, **caractérisée en ce que** le module électronique (2) comporte un substrat (5) servant de support notamment à un composant (3) présentant une surface active utile, en particulier un écran ou un capteur, et le module (2) est inséré dans la cavité (7) jusqu'à ce que ladite surface active utile affleure une surface de la carte.

5. Carte à puce selon la revendication 1, **caractérisé en ce que** le module électronique est un module commun (2') portant à la fois les composants du circuit raccordé à la batterie et des composants reliés à des pistes de contact (91) situées à la surface de la carte, et/ou à une antenne (8) intégrée à la carte.

6. Carte à puce selon la revendication 5, **caractérisé en ce qu'**elle comporte une antenne (8) intégrée à la carte en étant noyée dans le matériau constitutif de la carte et qui présente des plages de connexion (82) accessibles dans la cavité (7), et le module commun est connecté aux plages de connexion de l'antenne par des moyens de connexion (81) affleurant au niveau de ladite zone d'appui (13) de la cavité.

7. Carte à puce selon la revendication 4, **caractérisé en ce que** la cavité (7) formée dans le corps de carte est non débouchante à travers le corps de carte, et le module électronique (2) comporte un composant (3) présentant une surface active utile situé sur une première face du substrat et ses plages de connexion (51) sont situées sur une deuxième face du substrat, opposée à la première face.

8. Carte à puce selon la revendication 4, **caractérisé en ce que** le composant (3) présentant une surface active utile et tous les autres composants (4) ainsi que les plages de connexion (51) sont situés sur une même première face du substrat, la cavité (7) est débouchante à travers l'épaisseur de la carte, et comporte une partie (73) de plus petite dimension débouchant sur une première face de la carte et adaptée pour recevoir le composant (3) présentant une surface active utile, et une partie (74) de plus grande dimension débouchant sur la deuxième face de la carte et adaptée pour recevoir le substrat (5).

9. Carte à puce selon l'une quelconque des revendications 4 à 8, **caractérisé en ce qu'**un élément de recouvrement (31) est agencé de manière à recouvrir et dissimuler les parties (52) de substrat débordant autour du composant (3) présentant une surface active utile, au niveau de l'interface (72) entre ledit composant et le bord de la cavité.

10. Carte à puce selon la revendication 9, **caractérisé en ce que** l'élément de recouvrement est réalisé par un procédé d'impression sans contact.

11. Carte à puce selon la revendication 9, **caractérisé en ce que** l'élément de recouvrement est un cadre (31) entourant le composant (31) présentant une surface active utile et ayant une forme et des dimensions extérieures correspondant à celles de la cavité, ledit cadre (31) étant placé autour du composant présentant une surface active utile avant l'insertion du module dans la carte.

12. Carte à puce selon la revendication 9, **caractérisé en ce que** l'élément de recouvrement comporte une feuille rapportée sur la surface de la carte.

13. Procédé de fabrication d'une carte à puce comportant une batterie (6) et un module électronique (2) connecté et alimenté par ladite batterie, telle que définie dans l'une quelconque des revendications 1 à 10, ce procédé comportant notamment les étapes suivantes :
- préparation d'un module électronique (2) comportant divers composants électroniques (3, 4) de la carte, à l'exclusion de la batterie (6),
- réalisation d'un corps de carte (1) en noyant totalement une batterie (6) dans l'épaisseur du corps de carte,
- réalisation d'une cavité (7) dans le corps de carte, de dimension apte à recevoir le module électronique (2), et de manière à rendre accessible électriquement les bornes (61) de la batterie,
- insertion du module électronique (2) dans la cavité (7), en assurant la connexion électrique du module (2) avec les bornes (61) de la batterie et de manière à solidariser le module (2) avec le corps de carte (1).

14. Corps de carte pour une carte à puce selon l'une quelconque des revendications 1 à 12, **caractérisé en ce qu'il** comporte, noyée dans la matière qui le constitue essentiellement, une batterie (6), dont les pattes de connexion (61) sont accessibles électriquement à l'intérieur d'une cavité (7) formée dans le corps et débouchant sur au moins une des faces dudit corps, destinée à recevoir un module électronique (2).

15. Corps de carte selon la revendication 14, **caractérisé en ce qu'il** comporte des plots (62) de connexion solidaires des pattes de connexion de la batterie, et affleurant dans la cavité (7)

16. Corps de carte selon la revendication 14, **caractérisé en ce qu'il** comporte également une antenne noyée dans la matière constitutive du corps de carte dont les plages de connexion (82) sont accessibles électriquement à l'intérieur de la cavité (7).
